# EUROPEAN PATENT SPECIFICATION

(11) **EP 2 902 186 B1**
(45) Date of publication and mention of the grant of the patent: **22.11.2017**
(21) Application number: 13842753.9
(22) Date of filing: 27.09.2013
(51) Int. Cl.: B29C 47/00, B32B 5/18, B32B 27/08, B32B 27/32, B32B 27/20, B32B 27/06, C08J 5/18, C08J 9/00, C08K 3/00, C08L 101/00, C08J 7/04, B29L 7/00, B29K 23/00, C08K 9/04

(54) **STRETCHED RESIN FILM, METHOD FOR PRODUCING SAME, AND LAMINATE USING STRETCHED RESIN FILM**
GESTRECKTER KUNSTHARZFILM, HERSTELLUNGSVERFAHREN DAFÜR UND LAMINAT MIT DEM GESTRECKTEN KUNSTHARZFILM
FILM DE RÉSINE ÉTIRÉ, SON PROCÉDÉ DE FABRICATION ET STRATIFIÉ UTILISANT LE FILM DE RÉSINE ÉTIRÉ

(30) Priority: 28.09.2012 JP 2012215948
(43) Date of publication of application: 05.08.2015
(73) Proprietor: Yupo Corporation, Tokyo 101-0062 (JP)
(72) Inventor: ISHIMOTO, Shouichi, Kamisu-shi Ibaraki 314-0102 (JP); TAMAUCHI, Hiromitsu, Kamisu-shi Ibaraki 314-0102 (JP)
(74) Representative: Zimmermann & Partner Patentanwälte mbB
(86) International application number: PCT/JP2013/076267
(87) International publication number: WO 2014/051052

(56) References cited:
- JP-A- 2001 130 131
- JP-A- 2001 151 918
- JP-A- 2001 254 295
- JP-A- 2002 096 422
- JP-A- 2004 114 676
- US-A1- 2013 164 471

## Description

### Technical Field

The present invention relates to a stretched resin film, a method for producing the same, and a laminate using the stretched resin film. More specifically, the invention relates to a stretched resin film that is useful as a base film for coating, by which a uniform coating appearance is obtained on coating a coating material, such as a heat-sensitive adhesive and an ink fixing liquid, on the surface of the film substrate through absorption of a part of the coating material by the film substrate without formation of bubbles of the coating material.

### Background Art

Resin synthetic paper excellent in solvent resistance has been used mainly as an adhesive label using an adhesive containing an organic solvent, and a printing medium for offset printing and letterpress printing, which use a solvent ink, and for sublimation or melt heat transfer printing. In response to the recent demand for environmental friendliness, however, the use of an aqueous adhesive and an aqueous ink that respect the environment and the safety is being recommended instead of an adhesive containing an organic solvent and a solvent ink.

Accordingly, there is a demand of resin synthetic paper that has good absorbability to the aqueous adhesive and the aqueous ink, and also to water as the solvent therefor, and some proposals of synthetic paper having good absorbability to water have been made (see, for example, Patent Documents 1 to 6). The synthetic paper has been used as a glue label using an aqueous adhesive, a recording medium for ink-jet printing using an aqueous ink, and the like.

From US 2013/0164471 A1 a readily removable film substrate containing a substrate layer (A) and a readily removable layer (B) is known, wherein substrate layer (A) contains a thermoplastic resin, the readily removable layer (B) contains from 30 to 60 % by weight of a mixture of a crystalline polypropylene resin having a degree of crystallinity of at least 65 % and a thermoplastic resin immiscible with the crystalline polypropylene resin, and from 40 to 70 % by weight of a fine powder, in which the thermoplastic resin immiscible with the crystalline polypropylene resin is blended in a ratio of from 105 to 300 parts by weight relative to 100 parts by weight of the crystalline polypropylene resin, and the readily removable layer (B) is stretched at least monoaxially.

Comparative Example 4 of US 2013/0164471 A1 describes a laminate resin film comprising a substrate layer (A) of a mixture [A2] containing 34 % by weight of a propylene homopolymer (trade name: Novatec PP MA3AQ, by Nippon Polypro, MFR: 12 g/10 min (230°C, 2.16 kg load), melting point 164°C (DSC peak temperature), density 0.9062 g/cm³, degree of crystallinity 65.2 %), 20 % by weight propylene homopolymer (trade name: Novatec PP MA8Q, by Nippon Polypro, MFR: 0.8 g/10 min (230°C, 2.16 kg load), melting point 164°C (DSC peak temperature), density 0.9038 g/cm³, degree of crystallinity 62.5 %), 45 % by weight heavy calcium carbonate (trade name: Softon 1800, by Bihoku Funka Kogyo, dry ground product, mean particle size: 1.25 µm (air permeability method)), and 1 % by weight of maleic acid-modified polypropylene (trade name: Umex 1001, by Sanyo Chemical Industry, softening point 154°C), as well as a mixture [A1] containing 50 % by weight of a propylene homopolymer (trade name: Novatec PP MA3AQ, by Nippon Polypro, MFR: 12 g/10 min (230°C, 2.16 kg load), melting point 164°C (DSC peak temperature), density 0.9062 g/cm³, degree of crystallinity 65.2 %), 30 % by weight propylene homopolymer (trade name: Novatec PP MA8Q, by Nippon Polypro, MFR: 0.8 g/10 min (230°C, 2.16 kg load), melting point 164°C (DSC peak temperature), density 0.9038 g/cm³, degree of crystallinity 62.5 %), and 20 % by weight heavy calcium carbonate (trade name: Softon 1800, by Bihoku Funka Kogyo, dry ground product, mean particle size: 1.25 µm (air permeability method)). The laminate resin film further comprises a readily removable layer [B] containing 26 % by weight of polypropylene homopolymer (trade name: Novatec PP MA4U, by Nippon Polypro, MFR: 5 g/10 min (230°C, 2.16 kg load), melting point 164°C (DSC peak temperature), density 0.9082 g/cm³, degree of crystallinity 67.5 %), 38 % by weight of high-density polypropylene (trade name: Novatec HD HJ381, by Nippon Polyethylene, MFR: 10 g/10 min (190°C, 2.16 kg load), melting point: 133°C (DSC peak temperature), 35 % by weight of surface treated calcium carbonate (trade name: AFF-Z, by Fimatec - During wet grinding, this was surface-treated with a water-soluble cationic surfactant having a mean molecular weight of 55,000, then ground and further surface-treated with an anionic surfactant. This has a mean particle size of 1.2 µm). and 2 % by weight of maleic acid-modified polypropylene (trade name: Umex 1001, by Sanyo Chemical Industry, softening point 154°C). The laminate resin film material of Comparative Example 4 of US 2013/0164471 A1 has a liquid absorption capacity of 0.8 ml/m².

### Citation List

### Patent Documents

Patent Document 1: JP-A-10-212367
Patent Document 2: JP-A-2001-151918
Patent Document 3: JP-A-2001-164017
Patent Document 4: JP-A-2001-181423
Patent Document 5: JP-A-2001-226507
Patent Document 6: JP-A-2004-068017

### Summary of Invention

### Technical Problem

However, these kinds of synthetic paper are characterized by both the large water absorption amount and the large water absorption rate, and have a problem of occurrence of appearance failure due to formation of bubbles on coating a heat-sensitive adhesive or an ink fixing liquid, which are also aqueous coating materials. Accordingly, these kinds of resin synthetic paper have a problem that the synthetic paper may not be sufficiently used as a versatile base film for coating.

An object of the invention is to provide a stretched resin film having good absorbability to water that solves the ordinary problems, by which a uniform coating appearance is obtained on coating an aqueous coating material on the surface thereof through absorption of a part of the coating material by the film substrate without formation of bubbles, and a method for producing the stretched resin film. Another object of the invention is to provide a laminate that contains the stretched resin film.

### Solution to Problem

As a result of investigations of the causes of appearance failure that is liable to occur in the ordinary synthetic paper, it has been found that in the case where an aqueous coating material having high film forming property is coated on the ordinary synthetic paper, water as the solvent in the coating material is rapidly absorbed into the film substrate due to the high water absorbing rate thereof, and then air escapes through the pores in the film substrate being replaced by water, and forms bubbles on the surface of the coated layer having increased viscosity. In consideration of the investigation results, the inventors have made further investigations for preventing bubbles from being formed even with a film substrate having high water absorption property. As a result, it has been found that a stretched resin film having the following constitution may solve the problem, and thus the invention has been completed.

Specifically, in one aspect of the invention, there is provided a stretched resin film containing a water absorbing layer on at least one surface thereof, the water absorbing layer containing from 24 to 64% by mass of a thermoplastic resin (A), from 35 to 75% by mass of inorganic fine powder (B), and from 1 to 1.5% by mass of a hydrophilizing agent (C) for the inorganic fine powder, and the water absorbing layer having a liquid absorption capacity of 0.5 mL/m² or more measured according to the Bristow liquid absorbance test method of Japan TAPPI No. 51:2000, and a liquid absorption coefficient of from 0.1 to 2 mL/ (m²·ms^{1/2}) calculated by the same method.

In the water absorbing layer, the inorganic fine powder (B) is preferably surface-treated with the hydrophilizing agent (C). For example, the water absorbing layer may contain the inorganic fine powder (B) having a surface that is hydrophilized with the hydrophilizing agent (C), and the inorganic fine powder (B) that is not hydrophilized.

The hydrophilizing agent (C) preferably contains at least one of a water soluble cationic polymer and a water soluble anionic surfactant, and the water soluble cationic polymer used preferably contains, as constitutional units, at least one of a diallylamine salt and an alkyldiallylamine salt, and a nonionic hydrophilic vinyl monomer.

In the water absorbing layer, the thermoplastic resin (A) is preferably a crystalline polyolefin-based resin.

The stretched resin film is preferably stretched in at least one direction, and preferably has a stretching ratio of from 2 to 12 times in the case of uniaxial stretching and an area stretching ratio of from 2 to 80 times in the case of biaxial stretching.

The water absorbing layer preferably further contains from 0.01 to 20% by mass of a dispersant (D), and the dispersant (D) is preferably at least one of an acid-modified polyolefin and a silanol-modified polyolefin.

The stretched resin film may have a multilayer structure. In this case, the outermost layer of the multilayer structure is preferably the water absorbing layer.

The stretched resin film may be laminated with another sheet material to form a laminate. In this case, the laminate preferably has such a structure that has the water absorbing layer as the outermost layer thereof.

In another aspect of the invention, there is provided a method for producing a stretched resin film, containing: extruding a resin composition containing from 24 to 64% by mass of a thermoplastic resin (A), from 35 to 75% by mass of inorganic fine powder (B), and from 1 to 1.5% by mass of a hydrophilizing agent (C), into a sheet form to provide a resin sheet; and stretching the resin sheet in at least one direction.

In the method for producing a stretched resin film, it is preferred that the resin composition is laminated on at least one surface of a substrate, and then the substrate and the resin composition are stretched simultaneously.

In the method for producing a stretched resin film, it is preferred that the resin sheet is stretched at a temperature that is lower than the melting point of the thermoplastic resin (A) by 5°C or more.

### Advantageous Effects of Invention

In the stretched resin film and the method for producing the same of the invention, on coating a coating material on a surface of a film substrate, the film substrate may absorb a part of the coating material but may not form bubbles to provide a uniform coating appearance. Accordingly, the stretched resin film and the laminate containing the stretched resin film of the invention may be prevented from suffering surface failures in the appearance thereof and may achieve stable adhesion strength even in the case where an aqueous coating material having high film forming property, such as a heat-sensitive adhesive and an ink fixing liquid, is coated on the surface thereof, and thus the stretched resin film and the laminate containing the stretched resin film of the invention are suitable for a base film for coating.

### Description of Embodiments

The stretched resin film, the method for producing the same, and the laminate containing the stretched resin film of the invention will be described in detail below. The following description for the constitutional components may be made with reference to representative embodiments and specific examples, but the invention is not limited to the embodiments and the examples. In the description herein, the numerical range expressed using "to" means a range that includes the numerals before and after "to" as the lower limit value and the upper limit value.

### Stretched resin Film

The stretched resin film of the invention contains a water absorbing layer on at least one surface thereof, and the water absorbing layer contains a thermoplastic resin (A), inorganic fine powder (B), and a hydrophilizing agent (C).

### Thermoplastic Resin (A)

The thermoplastic resin (A) used in the stretched resin film of the invention constitutes a matrix resin of the water absorbing layer, and forms a porous structure of the water absorbing layer to retain the water absorbing layer.

Specific examples of the thermoplastic resin (A) used in the invention include a crystalline polyolefin-based resin, such as a crystalline ethylene-based resin, e.g., high density polyethylene, medium density polyethylene and low density polyethylene, a crystalline propylene-based resin, polymethyl-1-pentene and an ethylene-cyclic olefin copolymer; a polyamide-based resin, such as nylon-6, nylon-6, 6, nylon-6, 10 and nylon-6,12; a thermoplastic polyester-based resin, such as polyethylene terephthalate and a copolymer thereof, polyethylene naphthalate and an aliphatic polyester; a polycarbonate resin, such as aromatic polycarbonate and aliphatic polycarbonate; a polystyrene-based resin, such as atactic polystyrene and syndiotactic polystyrene; and other thermoplastic resins, such as polyphenylene sulfide and polyacrylonitrile-butadiene-styrene (ABS). These resins may be used as a mixture of two or more kinds thereof.

Among these, a crystalline polyolefin-based resin is preferably used from the standpoint of water resistance, solvent resistance, chemical resistance, production cost and the like. A crystalline polyolefin-based resin shows crystallinity. The use of a resin that shows crystallinity may facilitate the formation of a porous structure of the stretched resin film through stretching, facilitating the formation and retention of pores (hollows) on the surface thereof. The degree of crystallinity showing the crystallinity is generally preferably 20% or more, and more preferably 35% or more, and the upper limit thereof is preferably 75% or less. The degree of crystallinity may be measured by such a method as X-ray diffraction, infrared spectroscopy. In this point of view, a crystalline propylene-based resin is more preferably used in the crystalline polyolefin-based resin.

The crystalline propylene-based resin used is preferably an isotactic polymer or a syndiotactic polymer formed by homopolymerizing propylene. The crystalline propylene-based resin used also includes copolymers containing propylene as a major component having various stereoregularities obtained by copolymerizing propylene with an α-olefin, such as ethylene, 1-butene, 1-hexene, 1-heptene and 4-methyl-1-pentene. The copolymer may be a two-component copolymer or a three-component or higher multicomponent copolymer, and may be a random copolymer or a block copolymer.

The thermoplastic resin (A) is contained in the water absorbing layer in a proportion of from 24 to 64% by mass, preferably contained in a proportion of 26% by mass or more, and more preferably in a proportion of 27% by mass or more, and preferably contained in a proportion of 54% by mass or less, more preferably in a proportion of 52% by mass or less, and further preferably in a proportion of 50% by mass or less. The proportion of the thermoplastic resin (A) in the water absorbing layer that is 24% by mass or more may facilitate the retention of the porous structure, and that is 64% by mass or less may facilitate the formation of the porous structure.

### Inorganic Fine Powder (B)

The inorganic fine powder (B) used in the stretched resin film of the invention functions as nuclei that form the porous structure of the water absorbing layer.

Specific examples of the inorganic fine powder (B) used in the invention include inorganic fine powder, such as heavy calcium carbonate, light calcium carbonate, baked clay, talc, titanium oxide, barium sulfate, zinc oxide, magnesium oxide, diatom earth and silicon oxide; composite inorganic fine powder containing the inorganic fine powder as nuclei having around thereof aluminum oxide or aluminum hydroxide; and hollow glass beads. Among these, heavy calcium carbonate, baked clay and diatom earth are preferred since they are inexpensive, may form many pours on stretching, and facilitate the control of the porosity. Heavy calcium carbonate and light calcium carbonate are also preferred since they are commercially available as various products, with which the inorganic fine powder that has a desired average particle diameter and a desired particle diameter distribution may be easily obtained.

The average particle diameter of the inorganic fine powder is preferably 0.1 µm or more, more preferably 0.3 µm or more, and further preferably 0.5 µm or more. The average particle diameter of the inorganic fine powder is preferably 10 µm or less, more preferably 8 µm or less, and further preferably 5 µm or less. The average particle diameter of the inorganic fine powder that is 0.1 µm or more may facilitate the efficient formation of the porous structure. The average particle diameter of the inorganic fine powder that is 10 µm or less may prevent the film from being broken on stretching.

The average particle diameter of the inorganic fine powder herein means an average particle diameter that is measured by laser diffractiometry.

The inorganic fine powder (B) is contained in the water absorbing layer in a proportion of from 35 to 75% by mass, preferably contained in a proportion of 45% by mass or more, more preferably in a proportion of 47% by mass or more, and further preferably in a proportion of 48% by mass or more, and preferably contained in a proportion of 73% by mass or less, and more preferably in a proportion of 72% by mass or less. The proportion of the inorganic fine powder (B) in the water absorbing layer is preferably 35% by mass or more since the formation of continuous pores may be facilitated thereby. The proportion of the inorganic fine powder (B) in the water absorbing layer is preferably 75% by mass or less since the formation of the film (water absorbing layer) by stretching is facilitated.

The inorganic fine powder (B) may be a combination of two or more kinds of the inorganic fine powder. In this case, these kinds of the inorganic fine powder are contained in the water absorbing layer in a total amount of 75% by mass or less.

### Hydrophilizing Agent (C)

The stretched resin film of the invention necessarily contains from 1 to 1.5% by mass of the hydrophilizing agent (C) . The hydrophilizing agent (C) is added to the water absorbing layer of the resin stretching film for achieving the features of water absorbability of the water absorbing layer, i.e., the liquid absorption capacity measured according to the Bristow liquid absorbance test method of Japan TAPPI No. 51:2000 and the liquid absorption coefficient calculated as the same method that are in the particular ranges.

More specifically, the stretched resin film of the invention has the liquid absorption capacity that is large similar to the ordinary synthetic paper having good absorbability to water (i.e., the capability of absorbing a certain amount or more of water), and has the liquid absorption coefficient that is smaller than the ordinary synthetic paper having good absorbability to water (i.e., the slower absorption of water) . According to the properties, the absorbing rate of water, which is a solvent in a coating material, to the water absorbing layer may not be too large, and thereby air in the pores in the water absorbing layer escapes to the outside through the continuous pores and thus escapes to the exterior from the vicinity of the paper. Consequently, the stretched resin film of the invention absorbs a part of the coating material but does not form bubbles to provide a uniform coating appearance.

These properties may be achieved in the following manner. The inorganic fine powder (B) is used in the water absorbing layer of the stretched resin film of the invention in such an amount that is large similar to the ordinary synthetic paper having good absorbability to water, thereby forming a porous structure having a large proportion of pores, and simultaneously the amount of the hydrophilizing agent (C) is decreased as compared to the ordinary synthetic paper having good absorbability to water, thereby decreasing the amount of the hydrophilizing agent (C) that is present at the surface and the interface of the porous structure of the inorganic fine powder (B) for reducing the wettability of the surface and the interface to water.

Specific examples of the hydrophilizing agent (C) used in the invention include a water soluble cationic polymer and a water soluble anionic polymer surfactant. Examples of the cationic polymer include a copolymer of a cationic vinyl monomer and a nonionic vinyl monomer, and specific examples thereof include a copolymer of at least one of a diallylamine salt and an alkyldiallylamine salt, and a nonionic hydrophilic vinyl monomer, described in JP-A-5-263010. Examples of the anionic polymer surfactant include one having a sulfonic acid group described in JP-A-10-212367. Furthermore, the cationic polymer and an anionic polymer surfactant may be used in combination, as described in JP-A-10-212367.

### Inorganic Fine Powder (B) hydrophilized with Hydrophilizing Agent (C)

The hydrophilizing agent (C) used in the water absorbing layer of the stretched resin film of the invention may be added on mixing the materials of the water absorbing layer, as one of the materials to be mixed, and is preferably used for hydrophilizing the surface of the inorganic fine powder (B) in advance.

The surface treatment of the inorganic fine powder (B) with the hydrophilizing agent (C) may be performed in the following manner. An aqueous solution of at least one of a water soluble cationic polymer and a water soluble anionic polymer surfactant, which preferably have an average molecular weight of from 1,000 to 150,000, is introduced on wet-pulverizing the inorganic particles, and thereby the surface is treated while inorganic particles are pulverized. The hydrophilizing treatment with a water soluble cationic polymer and the hydrophilizing treatment with a water soluble anionic polymer surfactant may be performed sequentially. In this case, the order of the treatments is not limited. Preferred examples of the inorganic fine powder (B) having been hydrophilized with the hydrophilizing agent (C) include one described in JP-A-7-300568. Specific examples of the commercially available products of the inorganic fine powder (B) having been hydrophilized with the hydrophilizing agent (C) include AFF-Z (a trade name), available from Fimatec Ltd.

### Amount of Hydrophilizing Agent (C) mixed

The hydrophilizing agent (C) is contained in the water absorbing layer in a proportion of from 1 to 1.5% by mass. The proportion of the hydrophilizing agent (C) in the water absorbing layer that is 1% by mass or more may enhance the liquid absorption capacity, and the proportion of the hydrophilizing agent (C) in the water absorbing layer that is 1.5% by mass or less may suppress the liquid absorption coefficient from being increased.

The amount of the hydrophilizing agent (C) added may be controlled in such a manner that the respective materials are each weighed and mixed, the amount of the hydrophilizing agent (C) is controlled that is used for hydrophilizing the surface of the inorganic fine powder (B) on wet pulverizing, or the inorganic fine powder (B) having a surface that has been hydrophilized in a certain extent with the hydrophilizing agent (C) and the inorganic fine powder (B) that is not hydrophilized are each weighed and mixed, thereby making the intended range. In the case where both the inorganic fine powder (B) that has been hydrophilized and the inorganic fine powder (B) that is not hydrophilized are used, the inorganic fine powder (B) that is not hydrophilized is preferably used in an amount of 1 part by mass or more, more preferably 10 parts by mass or more, and further preferably 20 parts by mass or more, and is preferably used in an amount of 99 parts by mass or less, more preferably 85 parts by mass or less, and further preferably 70 parts by mass or less, per 100 parts by mass of the inorganic fine powder (B) that has been hydrophilized.

### Dispersant (D)

The water absorbing layer constituting the stretched resin film of the invention may contain a dispersant (D). The dispersant (D) in the invention is added for improving the dispersibility of the inorganic fine powder (B) in the water absorbing layer and enhancing the uniformity of the pores in the water absorbing layer. The dispersant (D) used in the invention may be a known dispersant for inorganic fine powder in a resin, and is preferably at least one of an acid-modified polyolefin-based resin and a silanol-modified polyolefin-based resin, and particularly preferably an acid-modified polyolefin-based resin. Specific examples thereof include Umex 1001 (a trade name), available from Sanyo Chemical Industries, Ltd. The dispersant may be used solely or as a combination of two or more kinds thereof.

In the case where the dispersant (D) is used in the water absorbing layer constituting the stretched resin film of the invention, the dispersant (D) preferably added thereto in an amount of 0.01% by mass or more, and more preferably 1% by mass or more. The dispersant (D) is preferably added thereto in an amount of 20% by mass or less, more preferably 10% by mass or less, and further preferably 5% by mass or less. The amount of the dispersant (D) that is 0.01% by mass or more may provide a tendency of facilitating the exertion of the original function of the dispersant (D), and the amount of the dispersant (D) that is 20% by mass or less may provide a tendency of preventing the inorganic fine powder (B) from being aggregated.

### Additives

The stretched resin film of the invention may contain known additives, such as a heat stabilizer, an ultraviolet ray absorbent, an antioxidant, an anti-blocking agent, a nucleating agent, a lubricant and a colorant, depending on necessity. The additives may also be added to the other layers than the water absorbing layer constituting the stretched resin film of the invention. In the case where the additives are added, the proportion thereof added is preferably from 0.01 to 3% by mass for each layer.

### Production of Stretched resin Film

The method for producing a stretched resin film of the invention will be described.

In one aspect of the invention, the method for producing a stretched resin film, contains: extruding a resin composition containing from 24 to 64% by mass of a thermoplastic resin (A), from 35 to 75% by mass of inorganic fine powder (B), and from 1 to 1.5% by mass of a hydrophilizing agent (C), into a sheet form to provide a resin sheet; and stretching the resin sheet in at least one direction. The method for producing a stretched resin film according to the aspect of the invention has one of the characteristic features thereof in the particular compositional ratio of the resin composition, and the other process steps thereof may be performed by combining various methods known to one skilled in the art. Any stretched resin film that satisfies the requirements of the invention is encompassed by the invention irrespective of the production method thereof.

The method for producing the stretched resin film of the invention from the resin composition as a material of the stretched resin film of the invention is not particularly limited, and may be appropriately selected from the methods having been ordinarily employed.

Examples of the method include a method of extruding the resin composition in a molten state into a sheet form, and then cooled to provide a resin sheet. The resin composition in this case may be generally melted at a temperature that is higher than the melting temperature of the resin composition by from 30 to 110°C, and preferably by from 50 to 90°C. On melting the resin composition, the resin composition is preferably kneaded simultaneously with melting.

Specifically, such a method may be preferably employed that the resin composition is melt-kneaded with an extruder or the like, and extruded from a T-die or the like into a sheet form. A casting method may be preferably employed, in which the resin composition extruded into a sheet form is pressed onto a cooling roll and then cooled with a cooling device or the like to provide a resin sheet. In this case, a multilayer resin sheet may be provided by laminating plural kinds of the resin compositions in the T-die. A multilayer resin sheet may also be obtained in such a manner that the resin composition is extruded from a T-die or the like into a sheet form and laminated on a resin sheet having been obtained by the casting method (the resin sheet may be stretched).

The stretched resin film of the invention contains a water absorbing layer that contains the resin composition containing the aforementioned materials, and the water absorbing layer is present on at least one surface of the stretched resin film of the invention, and furthermore is preferably stretched uniaxially or biaxially. The water absorbing layer may be stretched by various known methods.

### Layer Structure

The stretched resin film of the invention may have a single layer structure containing only the water absorbing layer or may have a multilayer structure of two or more layers containing the water absorbing layer having laminated thereon other resin layers. The stretched resin film having the single layer structure having only the water absorbing layer may be produced in such a manner that the resin composition containing the aforementioned materials is extruded into a sheet form to provide a resin sheet, and the resin sheet is then stretched uniaxially or biaxially.

In the multilayer structure, the water absorbing layer is preferably the outermost layer. Examples of the multilayer structure include the stretched resin film that has a structure containing a substrate layer having laminated on at least one surface thereof the water absorbing layer containing the resin composition. In this case, the multilayer structure may be a two-layer structure containing the substrate layer having on only one surface thereof the water absorbing layer, or may be a three-layer structure containing the substrate layer having on both surfaces thereof the water absorbing layers. The multilayer structure that contains other resin layers between the substrate layer and the water absorbing layer may also be used.

Examples of the material used for the substrate layer include a thermoplastic resin and a resin composition containing a thermoplastic resin and inorganic fine powder. The resin composition used in the substrate layer may further contain a dispersant. For the kinds of the thermoplastic resin, the inorganic fine powder and the dispersant used in the substrate layer, the kinds of the thermoplastic resin, the inorganic fine powder and the dispersant used in the water absorbing layer may be used.

In the stretched resin film having a multilayer structure, it is sufficient that at least a part of the layers may be stretched. Specifically, all the layers may be stretched, or only a part of the layers may be stretched, and all the layers are preferably stretched.

The multilayer structure may be produced by forming the layers separately and then laminating the layers, and by laminating the layers and then stretching uniaxially or biaxially them simultaneously.

In the case where the layers are formed separately, the number of the stretching axis and the stretching direction may be the same as or different from each other among the layers.

In the case where the layers are stretched simultaneously after the lamination, for example, the water absorbing layer may be laminated on one surface of a resin sheet, and then the laminate may be stretched uniaxially or biaxially to provide the laminated structure. In alternative, a resin sheet may be stretched uniaxially or biaxially, on which the water absorbing layer is then laminated to provide the laminated structure. The method of stretching the layers simultaneously after the lamination is preferred due to the easiness and the low production cost thereof.

### Uniaxially Stretching

Specific examples of the method for uniaxially stretching include a stretching method with plural rolls, in which the resin sheet is stretched in the conveying direction thereof by utilizing the difference in circumferential velocity of plural rolls (which is hereinafter referred to as a longitudinal stretching method), a clip stretching method, in which the resin sheet is stretched in the direction perpendicular to the conveying direction thereof (i.e., the transversal direction thereof) by utilizing a tenter oven (which is hereinafter referred to as a transversal stretching method), and an inflation molding method utilizing a tubular method.

According to the longitudinal stretching method, the uniaxially stretched resin film having an arbitrary porosity, an arbitrary rigidity, an arbitrary opacity, an arbitrary smoothness and an arbitrary glossiness may be easily obtained by controlling the stretching ratio arbitrarily. The longitudinal stretching method is preferably used since the stretched resin film having an arbitrary liquid absorption coefficient may be easily obtained by controlling the porosity arbitrarily. Accordingly, the stretching ratio is not particularly limited, and may be appropriately determined in consideration of the target properties of the stretched resin film of the invention, the characteristics of the thermoplastic resin (A) used, and the like. In the case where a crystalline propylene-based resin is used as the thermoplastic resin (A), the stretching ratio in the longitudinal stretching method is generally 2 times or more, preferably 4 times or more, and more preferably 5 times or more, and is generally 12 times or less, preferably 10 times or less, and more preferably 7 times or less. The stretching ratio that is in a range of from 2 to 12 times may provide a tendency of facilitating the stable production of the uniaxially stretched resin film having desired properties.

According to the transversal stretching method, the width of the resulting stretched resin film may be easily controlled although there is no such a degree of freedom in the stretching ratio that is equivalent to the longitudinal stretching method, due to the limitation in the equipments used therefor. The stretched resin film that has an enhanced film width may have an enhanced range of purposes. In the case where a crystalline propylene-based resin is used as the thermoplastic resin (A), the stretching ratio in the transversal stretching method is generally 4 times or more, and preferably 5 times or more, and is generally 11 times or less, preferably 10 times or less, and more preferably 9 times or less. The stretching ratio that is 4 times or more may provide a tendency of facilitating the production of the uniaxially stretched resin film having continuous pores formed therein and a uniform thickness by preventing stretching unevenness from occurring. The stretching ratio that is 11 times or less may provide a tendency of preventing effectively the breakage on stretching and the formation of coarse pores from occurring.

The stretching temperature is preferably lower than the melting point of the thermoplastic resin (A) by 5°C or more, and preferably by 10°C or more.

### Biaxially Stretching

The biaxially stretching method is preferred since the stretched resin film having a large width and an arbitrary liquid absorption coefficient may be easily obtained by controlling the porosity arbitrarily thereby. Specific examples of the biaxially stretching method include a sequential biaxially stretching method utilizing the longitudinal stretching method and the transversal stretching method in combination.

According to the sequential biaxially stretching method, the stretching ratio in longitudinal stretching may be arbitrarily controlled easily. The stretching ratio in transversal stretching may also controlled although the degree of freedom thereof may be rather small due to the limitation in the equipments used therefor. Accordingly, the biaxially stretched resin film having an arbitrary porosity, an arbitrary rigidity, an arbitrary opacity, an arbitrary smoothness and an arbitrary glossiness may be easily obtained thereby.

Examples of the biaxially stretching method also include a simultaneous biaxially stretching method, in which the resin sheet is stretched simultaneously in the conveying direction (i.e., the machine direction) of the resin sheet and the direction perpendicular to the conveying direction of the resin sheet. More specifically, examples thereof include simultaneous biaxially stretching methods utilizing a combination of a tenter oven and a pantograph, and a tenter oven and a linear motor in combination, and also include a simultaneous biaxially stretching method by a tubular method, which is a stretching method for an inflation film.

According to the simultaneous biaxially stretching method using a tenter oven, the stretched resin film that is isotropic and is suppressed in contraction due to stress relaxation as much as possible may be easily produced since the stretching ratios of longitudinal stretching and transversal stretching may be controlled simultaneously. Furthermore, the stretched resin film that has stable quality may be produced since the portion of stretching and conveying the resin sheet that depends on the rolls is small, but the portion of conveying the same that depends on the clip is large, thereby preventing the surface of the stretched resin film from receiving the influence of scratching with the equipments.

In the case where a crystalline propylene-based resin is used as the thermoplastic resin (A), the stretching ratio in the area stretching method is generally 2 times or more, preferably 10 times or more, and more preferably 15 times or more, and is generally 80 times or less, preferably 70 times or less, and more preferably 60 times or less. The area stretching ratio that is in a range of from 2 to 80 times may provide a tendency of facilitating the production of the water absorbing layer having desired properties. The stretching temperature is preferably a temperature that is lower than the melting point of the thermoplastic resin (A) by 5°C or more, and more preferably by 10°C or more.

### Heat Treatment

The stretched resin film after stretching is preferably subjected to a heat treatment for the purpose of relaxing the strain of the polymer molecular chains due to stretching. The temperature of the heat treatment is preferably in a range of from the stretching temperature to a temperature that is higher than the stretching temperature by 30°C. The heat treatment time is generally 0.1 second or more, preferably 0.5 second or more, and more preferably 1 second or more, and is generally 30 seconds or less, preferably 20 seconds or less, and more preferably 10 second or less. The heat treatment performed may reduce the heat contraction rate due to the residual stress in the stretching direction and may reduce the corrugation or the like of the sheet due to the contraction caused by tight winding or heat on storing the product. The heat treatment may be generally performed by a heating roll or a heating oven, which may also be used in combination. The heat treatment is preferably performed in a state where the stretched film is retained under strain since a higher effect thereof may be obtained.

### Conveying

The stretched resin film of the invention may be continuously produced while conveying the stretched resin film itself. Specifically, the resin sheet formed with the resin composition may be stretched uniaxially or biaxially and then subjected to the heat treatment depending on necessity while conveying the same, thereby providing the stretched resin film efficiently. The conveying speed for longitudinal stretching is generally 10 m/min or more, preferably 30 m/min or more, and more preferably 50 m/min or more, and is generally 500 m/min or less, preferably 300 m/min or less, and more preferably 200 m/min or less. The conveying speed for transversal stretching is generally 10 m/min or more, preferably 30 m/min or more, and more preferably 50 m/min or more, and is generally 150 m/min or less, preferably 120 m/min or less, and more preferably 100 m/min or less. The conveying speed for sequential biaxially stretching is generally 10 m/min or more, preferably 30 m/min or more, and more preferably 50 m/min or more, and is generally 500 m/min or less, preferably 300 m/min or less, and more preferably 200 m/min or less. The conveying speed for simultaneous biaxially stretching is generally 3 m/min or more, and preferably 5 m/min or more, and is generally 350 m/min or less, preferably 120 m/min or less, and more preferably 100 m/min or less. The stretched resin film in a strip form produced continuously may be cut into a desired size during the production process, or may be once stored and transported in a rolled form and then cut into a desired size.

### Laminate

The stretched resin film of the invention after once producing may be further laminated with another sheet product to form a laminate.

Examples of the sheet product herein include an another stretched resin film, a thermoplastic resin sheet, laminated paper, pulp paper, a woven cloth, a nonwoven cloth and a resin coating layer. In any case, these are preferably laminated in such a manner that the water absorbing layer of the stretched resin film is the outermost layer.

Furthermore, such a structure may also be employed that another thermoplastic resin film layer, a nonwoven cloth layer or the like is held as an intermediate layer between two plies of the stretched resin films.

### Properties of Stretched resin Film

### Thickness

The thickness of the stretched resin film of the invention means a value that is measured according to JIS K7130:1999.

In the case where the stretched resin film of the invention as a multilayer structure, the thicknesses of the layers including the water absorbing layer may be obtained in such a manner that the cross section of the specimen to be measured is observed with a scanning electron microscope for determining the boundaries among the resin compositions from the observed image, and the thickness of the layer is obtained by multiplying the thickness ratio of the layer observed by the total thickness of the stretched resin film.

The thickness of the stretched resin film of the invention is not particularly limited, and for the purpose of a base film for coating, is preferably 20 µm or more, more preferably 40 µm or more, and further preferably 50 µm or more, and is preferably 500 µm or less, more preferably 400 µm or less, and further preferably 300 µm or less.

The thickness of the water absorbing layer constituting the stretched resin film of the invention is preferably 1 µm or more, more preferably 3 µm or more, and further preferably 5 µm or more, and is preferably 100 µm or less, more preferably 70 µm or less, and further preferably 60 µm or less, in relation to the liquid absorption capacity thereof.

In the case of the laminated structure containing the water absorbing layer and the substrate layer, the thickness of the substrate layer is preferably 15 µm or more, more preferably 20 µm or more, and further preferably 30 µm or more, and is preferably 400 µm or less, more preferably 300 µm or less, and further preferably 200 µm or less.

### Density

The density of the stretched resin film of the invention means a value that is measured according to JIS P8118:1998.

The density of the stretched resin film of the invention is generally 0.5 g/cm³ or more, preferably 0.6 g/cm³ or more, and more preferably 0.7 g/cm³ or more, and is generally 1.6 g/cm³ or less, preferably 1.4 g/cm³ or less, and more preferably 1.2 g/cm³ or less, from the standpoint of the stability in film formation.

### Liquid Absorption Capacity

The liquid absorption capacity of the water absorbing layer in the invention is a transferred amount of a liquid measured according to the liquid absorbability test method by the Bristow method described in Japan TAPPI No. 51:2000, and means an absorbed amount per unit area after 1,092 msec from dropping the measurement solution.

The liquid absorption capacity of the water absorbing layer of the invention is 0.5 mL/m² or more, preferably 1 mL/m² or more, more preferably 3 mL/m² or more, and further preferably 5 mL/m² or more, and is preferably 100 mL/m² or less, more preferably 70 mL/m² or less, and further preferably 60 mL/m² or less. The water absorbing layer that has a liquid absorption capacity of 0.5 mL/m² or more may sufficiently exert the function of liquid absorption and is useful as a base film for coating.

### Liquid Absorption Coefficient

The liquid absorption coefficient of the water absorbing layer in the invention is a absorption coefficient calculated according to the liquid absorbability test method by the Bristow method described in Japan TAPPI No. 51:2000, and means a gradient of a straight line that is obtained by the least square method from a water absorption curve in a range of from after 25 msec to after 143 msec from dropping the measurement solution.

The liquid absorption coefficient of the water absorbing layer of the invention is from 0.1 to 2 mL/ (m²·ms^{1/2}), preferably 0.15 mL/ (m²·ms^{1/2}) or more, and more preferably 0.2 mL/ (m²·ms^{1/2}) or more, and is preferably 1.8 mL/(m²·ms^{1/2}) or less, and more preferably 1.5 mL/ (m²·ms^{1/2}) or less. The water absorbing layer that has a liquid absorption coefficient of 0.1 mL/ (m²·ms^{1/2}) or more may sufficiently exert the function of liquid absorption and may not cause delay in drying the coated liquid. The water absorbing layer that has a liquid absorption coefficient of 2 mL/ (m²·ms^{1/2}) or less may not cause bubbles that appear as defects on the coated surface.

The liquid absorption coefficient and the liquid absorption capacity may be controlled by the kinds, the mixing amounts and the like of the hydrophilizing agent and the inorganic fine powder.

### Permeation Depth of Coating material

The permeation depth of a coating material in the stretched resin film of the invention may be obtained in such a manner that a sufficient amount of a coating composition is coated and dried on the surface of the water absorbing layer of the specimen to be measured, then the specimen is cut to prepare a specimen for measuring cross section, the resulting specimen is observed for the cross section thereof with a scanning electron microscope (SEM), and the permeation depth is calculated by image analysis of the observed image. For enhancing the adhesion of the coating material, the permeation depth of a coating material of the stretched resin film is preferably 3 µm or more, and more preferably 5 µm or more. For suppressing bubbles from occurring on coating the coating material, the permeation depth thereof is preferably 15 µm or less, and more preferably 10 µm or less.

### Adhesion Strength

The adhesion strength of the stretched resin film of the invention means a value that is measured as a 180-degree peeling adhesion strength according to JIS Z0237:2000. From the standpoint of the adhesion strength between a coating material (coated film) and the stretched resin film, the adhesion strength is preferably 1.96 N/15 mm (200 gf/15 mm) or more, more preferably 2.16 N/15 mm (220 gf/15 mm) or more, and further preferably 2.45 N/15 mm (250 gf/15 mm) or more. The adhesion strength of 1.96 N/15 mm (200 gf/15 mm) or more means a sufficient adhesion strength between the coating material (coated film) and the stretched resin film, which means that the stretched resin film is useful as a base film for coating. The adhesion strength in such a range may be achieved by the anchoring effect of the coating material to the stretched resin film in the case where the permeation depth is 5 µm or more.

### Opacity

The opacity of the stretched resin film of the invention means an opacity that is measured according to JIS P8149:2000. The opacity of the stretched resin film of the invention is preferably from 10 to 100%. The opacity that is 10% or more may provide a tendency that the water absorbing layer has a sufficient number of pores formed therein to provide the desired liquid absorption coefficient in the invention. In the case where the stretched resin film of the invention is used as a printing medium, letters printed thereon are desirably readable, and thus the opacity of the stretched resin film is preferably from 40 to 100%, more preferably from 50 to 100%, and further preferably from 60 to 100%. The letters are sufficiently readable when the opacity is 40% or more.

### Purpose of Stretched resin Film

The stretched resin film of the invention or the laminate obtained by laminating the stretched resin film of the invention is useful as a base film for coating, in which various kinds of coating materials are favorably coated on the surface of the water absorbing layer thereof. A product obtained by coating a coating material, such as a heat-sensitive adhesive and an ink fixing liquid, on the stretched resin film or the laminate may be used for such a purpose as a heat-sensitive label or an ink-jet recording medium, respectively.

### Example

The invention will be described in more detail below with reference to production examples, examples, comparative examples and test examples. The materials, the amounts used, the ratios, the procedures and the like shown below may be appropriately changed unless they deviate from the substance of the invention. Accordingly, the invention is not construed as being limited to the specific examples shown below. The materials used in Examples and Comparative Examples are shown in Table 1. In the table, MFR means a melt flow rate according to JIS K7210:1999, and the softening point means a Vicat softening temperature according to JIS K7206:1999.

### Thickness

The thickness of the stretched resin film was measured according to JIS K7130:1999 with a constant pressure thickness gauge (PG-01J, a trade name, available from Teclock Corporation).

In the case where the resulting stretched resin film had a multilayer structure, the thicknesses of the layers including the water absorbing layer were measured in the following manner. The specimen to be measured was cooled to a temperature of -60°C or less with liquid nitrogen, and the specimen placed on a glass plate was cut perpendicularly with a razor blade (Proline Blade, a trade name, available from Schick Japan K.K.) to prepare a specimen for measurement of cross section. The resulting specimen was observed for the cross section thereof with a scanning electron microscope (JSM-6490, a trade name, available from JEOL, Ltd.) for determining the boundaries among the resin composition from the appearances of the compositions, and the thickness of the layer was obtained by multiplying the thickness ratio of the layer thus observed, by the total thickness of the stretched resin film.

### Density

The density of the stretched resin film was measured according to JIS P8118:1998 with a constant pressure thickness gauge (PG-01J, a trade name, available from Teclock Corporation) and an electric balance (UX220H, a trade name, available from Shimadzu Corporation).

### Opacity

The opacity of the stretched resin film was measured according to JIS P8149:2000. The opacity was a value in terms of percentage obtained by dividing a value measured by placing a black plate on the back surface of the specimen by a value measured by placing a white plate on the back surface of the specimen.

### Production Examples of Resin Compositions (a) to (j)

The materials shown in Table 1 were mixed in the ratio shown in Table 1 to prepare material mixtures (a) to (j). The mixtures were each melt-kneaded with a twin-screw kneader set at 210°C and then extruded into a strand form with an extruder set at 230°C. After cooling, the extruded compositions were each cut with a strand cutter to provide pellets of the resin compositions (a) to (j), which were used in Production Examples below.

### Production Example 1 of Stretched resin Film

The resin composition (a) for a water absorbing layer and the resin composition (h) for a substrate layer were melt-kneaded with two extruders set at 250°C, respectively, and the compositions were laminated on each other in a co-extrusion T-die and extruded therefrom into a sheet form, followed by cooling to 80°C with a cooling device, so as to provide a unstretched resin sheet.

After the resin sheet was heated to 140°C, the resin sheet was uniaxially stretched in a stretching ratio of 5 times in the conveying direction (longitudinal direction) of the resin sheet by a stretching method using plural rolls utilizing the difference in circumferential velocity among plural rolls, and then subjected to a heat treatment at 160°C for 2 seconds. Thereafter, the stretched film was cooled to 60°C and cut to remove the side edges thereof, thereby providing a uniaxially stretched resin film. The conveying speeds of the resin sheet and the stretched resin film in the regions other than the stretching zone were controlled to 100 m/min after stretching.

The resulting stretched resin film had the properties (thickness, density and opacity) shown in Table 2.

### Production Examples 2 to 9

Uniaxially stretched resin films of Production Examples 2 to 9 were produced in the same manner as in Production Example 1 except that the resin composition (a) for a water absorbing layer was changed to the resin compositions (b) to (j) for a water absorbing layer shown in Table 2.

In the examples, the conveying speeds of the resin sheet and the stretched resin film in the regions other than the stretching zone were controlled to 100 m/min after stretching.

### Production Example 10

A stretched resin film described in Example 9 of JP-A-10-212367 was used.

### Production Example 11

A stretched resin film was tried to produce in the same manner as in Production Example 1 except that the resin composition (a) for a water absorbing layer was changed to the resin composition (k) for a water absorbing layer shown in Table 2, but the water absorbing layer was not stretched uniformly to fail to provide a film.

### Production Examples 12 to 20

Uniaxially stretched resin films of Production Examples 12 to 20 were produced in the same manner as in Production Example 1 except that the resin composition (a) for a water absorbing layer was changed to the resin compositions (b) to (j) for a water absorbing layer shown in Table 2, and the stretching method was changed to a clip stretching method using a tenter stretching machine at a stretching temperature of 155°C and a stretching ratio of 8 times. In the examples, the conveying speeds of the resin sheet and the stretched resin film were controlled to 70 m/min.

### Production Example 21

A stretched resin film was tried to produce in the same manner as in Production Example 10 except that the resin composition (a) for a water absorbing layer was changed to the resin composition (k) for a water absorbing layer, but the water absorbing layer was not stretched uniformly to fail to provide a film.

### Production Example 22

The resin composition (h) for a substrate layer was melt-kneaded in an extruder set at 250°C and extruded therefrom through a T-die into a sheet form, which was then cooled to 80°C with a cooling device to provide an unstretched resin sheet.

After the resin sheet was heated to 140°C, the resin sheet was uniaxially stretched in a stretching ratio of 5 times in the conveying direction (longitudinal direction) of the resin sheet by a stretching method using plural rolls utilizing the difference in circumferential velocity among plural rolls, and then cooled to 60°C to provide a uniaxially stretched resin film.

Subsequently, the resin composition (a) for a water absorbing layer was melt-kneaded in two extruders set at 250°C, extruded therefrom through T-dies, and laminated on both surfaces of the aforementioned uniaxially stretched resin film to provide a laminate having a three-layer structure.

After the three-layer laminate was again heated to a stretching temperature of 155°C with a tenter oven, the laminate was stretched by a clip stretching method with a tenter stretching machine in the width direction (transversal direction) of the resin sheet in a stretching ratio of 8 times, and further heated in an oven to 160°C for 2 seconds for performing a heat treatment. Thereafter, the stretched film was cooled to 60°C and cut to remove the side edges thereof, thereby providing a three-layer stretched resin film (uniaxially stretched layer/biaxially stretched layer/uniaxially stretched layer) by a sequential biaxially stretching method. The conveying speeds of the resin sheet and the stretched resin film were controlled to 120 m/min.

### Production Examples 23 to 30

Three-layer stretched resin films (uniaxially stretched layer/biaxially stretched layer/uniaxially stretched layer) of Production Examples 23 to 30 were produced by a sequential biaxially stretching method in the same manner as in Production Example 22 except that the resin composition (a) for a water absorbing layer was changed to the resin compositions (b) to (j) for a substrate layer shown in Table 3.

### Production Example 31

A stretched resin film was tried to produce in the same manner as in Production Example 22 except that the resin composition (a) for a water absorbing layer was changed to the resin composition (k) for a water absorbing layer, but the water absorbing layer was not stretched uniformly to fail to provide a film.

### Production Example 32

The resin composition (h) for a water absorbing layer and the resin composition (a) for a substrate layer were respectively melt-kneaded in three extruders set at 250°C and laminated so as to be a configuration of water absorbing layer/substrate layer/water absorbing layer and extruded with a coextrusion T-die into a sheet form, which was cooled to 80°C with a cooling device to prepare an unstretched resin sheet.

After heating the resin sheet to 155°C, the resin sheet was stretched in both the conveying direction (longitudinal direction) of the resin sheet in a stretching ratio of 5 times and the direction perpendicular to the conveying direction (transversal direction) of the resin sheet in a stretching ratio of 8 times by using a simultaneous biaxially stretching machine using a combination of a tenter oven and a pantograph, and further heated in an oven to 165°C for 4 seconds for performing a heat treatment, so as to provide a three-layer stretched resin film (biaxially stretched layer/biaxially stretched layer/ biaxially stretched layer) by a simultaneous biaxially stretching method.

### Production Examples 33 to 40

Three-layer stretched resin films (biaxially stretched layer/biaxially stretched layer/ biaxially stretched layer) simultaneous biaxially stretched, of Production Examples 33 to 40 were produced in the same manner as in Production Example 32 except that the resin composition (a) for a water absorbing layer was changed to the resin compositions (b) to (j) for a substrate layer shown in Table 3.

### Production Example 41

A stretched resin film was tried to produce in the same manner as in Production Example 32 except that the resin composition (a) for a water absorbing layer was changed to the resin composition (k) for a water absorbing layer, but the water absorbing layer was broken to fail to provide a film.

### Production Examples 42 to 52

Stretched resin films described in examples of the patent documents shown in Table 3 were used.

**Table 1**

| Kind | Content | Composition example of resin composition (unit: % by weight) | | | | | | | | | | |
|---|---|---|---|---|---|---|---|---|---|---|---|---|
| | | (a) | (b) | (c) | (d) | (e) | (f) | (q) | (h) | (i) | (j) | (k) |
| Thermoplastic resin (A) | Crystalline polypropylene (Novatec PP MA-3 (trade name), available from Japan Polypropylene Corporation, MFR (JIS K7210): 11 g/10 min) | 38 | 34 | 31 | 57 | 58 | 38 | 68 | 84 | 38 | 33 | 16 |
| Inorganic fine powder (B) | Calcium carbonate surface-treated with hydrophilizing agent (C) (AFF-Z (trade name), available from Fimatec Ltd., surface-treated amount: 48 mg/g, average particle diameter: 1.0 µm) | 30 | 40 | 25 | 25 | 40 | 45 | 30 | - | 15 | 65 | 40 |
| | Heavy calcium carbonate (Caltex 5 (trade name), available from Maruo Calcium Co., Ltd., average particle diameter: 0.9 µm) | 30 | 25 | 40 | 15 | - | 15 | - | 16 | 45 | - | 40 |
| Dispersant (D) | Maleic anhydride-modified polypropylene (Umex 1001 (a trade name), available from Sanyo Chemical Industries, Ltd., acid value: 26 mg/g, softening point (JIS K2531): 154°C) | 2 | 1 | 4 | 3 | 2 | 2 | 2 | - | 2 | 2 | 4 |
| Proportions | Mixed amount of inorganic fine powder (B) | 58.6 | 63.1 | 63.8 | 38.8 | 38.1 | 57.8 | 28.6 | 16.0 | 59.3 | 61.9 | 78.1 |
| | Mixed amount of hydrophilizing agent (C) | 1.4 | 1.9 | 1.2 | 1.2 | 1.9 | 2.2 | 1.4 | 0.0 | 0.7 | 3.1 | 1.9 |

**Table 2**

| Production Example (uniaxially stretching) | Resin composition | | Stretching condition | | Properties of stretched resin film | | | |
|---|---|---|---|---|---|---|---|---|
| | Water absorbing layer | Substrate layer | Stretching temperature (°C) | Stretching ratio (time) | Thickness of water absorbing layer (µm) | Thickness of substrate layer (µm) | Density (g/cm³) | Opacity (%) |
| Production Example 1 | a | h | 140 | 5 | 50 | 200 | 1.02 | 60 |
| Production Example 2 | b | h | 140 | 5 | 49 | 200 | 1.04 | 70 |
| Production Example 3 | c | h | 140 | 5 | 49 | 200 | 1.04 | 69 |
| Production Example 4 | d | h | 140 | 5 | 48 | 200 | 1.00 | 38 |
| Production Example 5 | e | h | 140 | 5 | 48 | 200 | 1.00 | 40 |
| Production Example 6 | f | h | 140 | 5 | 50 | 200 | 1.02 | 60 |
| Production Example 7 | g | h | 140 | 5 | 46 | 200 | 0.97 | 20 |
| Production Example 8 | i | h | 140 | 5 | 50 | 200 | 1.02 | 59 |
| Production Example 9 | j | h | 140 | 5 | 49 | 200 | 1.04 | 65 |
| Production Example 10 | Example 9 of JP-A-10-212367 | | 135 | 5 | 20 | 60 | 0.85 | 93 |
| Production Example 11 | k | h | 140 | 5 | unmeasurable due to non-uniform stretching of water absorbing layer | | | |
| Production Example 12 | a | h | 155 | 8 | 39 | 132 | 0.93 | 78 |
| Production Example 13 | b | h | 155 | 8 | 35 | 132 | 0.96 | 90 |
| Production Example 14 | c | h | 155 | 8 | 35 | 132 | 0.96 | 90 |
| Production Example 15 | d | h | 155 | 8 | 32 | 132 | 0.94 | 55 |
| Production Example 16 | e | h | 155 | 8 | 32 | 132 | 0.94 | 58 |
| Production 17 | f | h | 155 | 8 | 39 | 132 | 0.93 | 80 |
| Production Example 18 | g | h | 155 | 8 | 30 | 132 | 0.92 | 32 |
| 19 | i | h | 155 | 8 | 39 | 132 | 0.93 | 77 |
| Production Example 20 | j | h | 155 | 8 | 37 | 132 | 0.96 | 85 |
| Production Example 21 | k | h | 155 | 8 | unmeasurable due to non-uniform stretching of water absorbing layer | | | |

**Table 3**

| Production Example (biaxially stretching) | Resin composition | | Number of stretching axis (*) absorbing layer/ substrate layer/ absorbing layer | Area stretching ratio of water absorbing layer (time) | Properties of stretched resin film | | | |
|---|---|---|---|---|---|---|---|---|
| | Water absorbing layer | Substrate layer | | | Thickness of water absorbing layer (µm) | Thickness of substrate layer (µm) | Density (g/cm³) | Opacity (%) |
| Production Example 22 | a | h | 1/2/1 | 8 | 39 | 200 | 0.76 | 90 |
| Production Example 23 | b | h | 1/2/1 | 8 | 37 | 200 | 0.78 | 97 |
| Production Example 24 | c | h | 1/2/1 | 8 | 37 | 200 | 0.78 | 97 |
| Production Example 25 | d | h | 1/2/1 | 8 | 32 | 200 | 0.76 | 78 |
| Production Example 26 | e | h | 1/2/1 | 8 | 32 | 200 | 0.76 | 80 |
| Production Example 27 | f | h | 1/2/1 | 8 | 39 | 200 | 0.76 | 93 |
| Production Example 28 | g | h | 1/2/1 | 8 | 30 | 200 | 0.74 | 60 |
| Production Example 29 | i | h | 1/2/1 | 8 | 39 | 200 | 0.76 | 90 |
| Production Example 30 | j | h | 1/2/1 | 8 | 37 | 200 | 0.78 | 95 |
| Production Example 31 | k | h | 1/2/1 | 8 | unmeasurable due to non-uniform stretching of water absorbing layer | | | |
| Production Example 32 | a | h | 2/2/2 | 40 | 10 | 34 | 0.72 | 67 |
| Production Example 33 | b | h | 2/2/2 | 40 | 9 | 34 | 0.74 | 80 |
| Production Example 34 | c | h | 2/2/2 | 40 | 9 | 34 | 0.74 | 79 |
| Production Example 35 | d | h | 2/2/2 | 40 | 8 | 34 | 0.74 | 47 |
| Production Example 36 | e | h | 2/2/2 | 40 | 8 | 34 | 0.74 | 50 |
| Production Example 37 | f | h | 2/2/2 | 40 | 10 | 34 | 0.72 | 68 |
| Production Example 38 | q | h | 2/2/2 | 40 | 6 | 34 | 0.74 | 34 |
| Production Example 39 | i | h | 2/2/2 | 40 | 10 | 34 | 0.72 | 35 |
| Production Example 40 | j | h | 2/2/2 | 40 | 9 | 34 | 0.74 | 73 |
| Production Example 41 | k | h | 2/2/2 | 40 | unmeasurable due to breakage of water absorbing layer | | | |
| Production Example 42 | Example 1 of JP-A-10-212367 | | 1/2/1 | 8 | 20 | 60 | 0.78 | 93 |
| Production Example 43 | Example 2 of JP-A-10-212367 | | 1/2/1 | 8 | 20 | 60 | 0.78 | 93 |
| Production Example 44 | Example 3 of JP-A-10-212367 | | 1/2/1 | 8 | 20 | 60 | 0.78 | 93 |
| Production Example 45 | Example 4 of JP-A-10-212367 | | 1/2/1 | 8 | 20 | 60 | 0.85 | 90 |
| Production Example 46 | Example 5 of JP-A-10-212367 | | 1/2/1 | 8 | 20 | 60 | 0.97 | 88 |
| Production Example 47 | Example 6 of JP-A-10-212367 | | 1/2/1 | 8 | 20 | 60 | 0.78 | 93 |
| Production Example 48 | Example 7 of JP-A-10-212367 | | 1/2/1 | 8 | 20 | 60 | 0.87 | 90 |
| Production Example 49 | Example 8 of JP-A-10-212367 | | 1/2/1 | 8 | 20 | 60 | 0.75 | 95 |
| Production Example 50 | Example 10 of JP-A-10-212367 | | 2/2/2 | 40 | 15 | 50 | 0.70 | 97 |
| Production Example 51 | Example 1 of JP-A-10-235991 | | 1/2/1 | 7.5 | 25 | 60 | 0.77 | 94 |
| Production Example 52 | Example 1 of JP-A-9-76647 | | 1/2/1 | 7.5 | 20 | 40 | 0.75 | 90 |

| | | | | | | | | |
|---|---|---|---|---|---|---|---|---|
| (*) water absorbing layer/substrate layer/water absorbing layer | | | | | | | | |

### Examples 1 to 20 and Comparative Examples 1 to 32

In the stretched resin films of Production Examples 1 to 52, ones within the scope of the invention were designated as Examples 1 to 20, and ones outside the scope of the invention were designated as Comparative Examples 1 to 32. The films that were able to be produced, i.e., Examples 1 to 20 and Comparative Examples 1 to 5, 7 to 10, 12 to 15, 17 to 20, and 22 to 32, were subjected to the following tests. The results are shown in Table 4.

### Liquid Absorption Capacity

The liquid absorption capacity of the stretched resin film was a transferred amount (V) of a liquid measured according to the Bristow method (Japan TAPPI No. 51:2000) with a liquid dynamic absorption tester (Bristow Tester Model II, a trade name, available from Kumagai Riki Kogyo Co., Ltd.). The liquid absorption capacity was obtained in such a manner that 98% by mass of distilled water and 2% by mass of a stamp ink (red) (available from Shachihata Inc.) as a coloring dye were mixed to prepare a measurement solution, and the liquid absorption capacity was obtained from the absorbed amount per unit area after 1,092 msec from dropping the measurement solution.

### Liquid Absorption Coefficient

The liquid absorption coefficient of the stretched resin film was an absorption coefficient (Ka) calculated according to the Bristow method (Japan TAPPI No. 51:2000) with a liquid dynamic absorption tester (Bristow Tester Model II, a trade name, available from Kumagai Riki Kogyo Co., Ltd.). The liquid absorption coefficient was obtained in such a manner that 98% by mass of distilled water and 2% by mass of a stamp ink (red) (available from Shachihata Inc.) as a coloring dye were mixed to prepare a measurement solution, a straight line that was obtained by the least square method from a water absorption curve in a range of from after 25 msec to after 143 msec from dropping the measurement solution, and a gradient of the straight line was obtained and designated as the liquid absorption coefficient.

### Formation of Bubbles on Coating

The stretched resin film was cut into an A4 size (210 mm x 297 mm) to prepare a specimen, and on the surface of the water absorbing layer of the specimen, a heat-sensitive adhesive (delayed tack adhesive, ED900, a trade name, available from DIC Corporation) was coated with a bar coater (PI-1210 Automatic Applicator, a trade name, available from Tester Sangyo Co., Ltd.) and a bar No. 2 to make 5 g/m², followed by drying at 70°C for 1 minute. The appearance of the coated surface was visually observed to measure the number of bubbles on the surface. The number of bubbles was evaluated in two grades according to the following standard.
A: No bubble was found.
B: Appearance failure was found due to formation of one or more bubble.

### Permeation Depth of Coating material

The stretched resin film was cut into an A4 size (210 mm x 297 mm) to prepare a specimen, and on the surface of the water absorbing layer of the specimen, a heat-sensitive adhesive (delayed tack adhesive, ED900, a trade name, available from DIC Corporation) was coated with a bar coater (PI-1210 Automatic Applicator, a trade name, available from Tester Sangyo Co., Ltd.) and a bar No. 9 to make 20 g/m², followed by drying at 70°C for 1 minute. The permeation depth of a coating material was measured in the following manner. The specimen to be measured was cooled to a temperature of -60°C or less with liquid nitrogen, and the specimen placed on a glass plate was cut perpendicularly with a razor blade (Proline Blade, a trade name, available from Schick Japan K.K.) to prepare a specimen for measurement of cross section. The resulting specimen was observed for the cross section thereof with a scanning electron microscope (JSM-6490, a trade name, available from JEOL, Ltd.) for determining the thickness ratio that was observed as the permeation depth of the coating material from the appearances of the compositions, and the permeation depth of the coating material was obtained by multiplying the thickness ratio thus observed, by the total thickness of the stretched resin film. The permeation depth of a coating material was evaluated in two grades according to the following standard.
- A:: The permeation depth was 5 µm or more and 15 µm or less.
- B:: The permeation depth was less than 5 µm or 16 µm or more.

### Adhesion Strength

The stretched resin film cut into a size of 15 mm in width and 300 mm in length was heated to 120°C for 1 minute in a circulation dryer, and measured for a 180-degree peeling adhesion strength according to JIS Z0237:2000. The adhesion strength was evaluated in two grades according to the following standard.
A: The adhesion strength was 1.96 N/15 mm (200 gf/15 mm) or more.
B: The adhesion strength was less than 1.96 N/15 mm (200 gf/15 mm).

**Table 4**

| Example and Comparative Example | Production Example | Hydrophilizing agent (C) | Liquid absorption capacity | Liquid absorption coefficient | Formation of bubbles on coating | Permeation depth of coating material | | Adhesion strength | |
|---|---|---|---|---|---|---|---|---|---|
| | | Mixed amount in water absorbing layer (wt%) | Measured value (mL/m²) | Calculated value (mL/ (m²·ms^{1/2})) | | Evaluation | (µm) | Strength (gf/15 mm) | Evaluation |
| Example 1 | Production Example 1 | 1.4 | 18 | 1.3 | A | A | 11 | 247 | A |
| Example 2* | Production Example 2 | 1.9 | 20 | 1.7 | A | A | 14 | 250 | A |
| Example 3 | Production Example 3 | 1.2 | 20 | 1.1 | A | A | 10 | 250 | A |
| Example 4 | Production Example 4 | 1.2 | 8 | 0.2 | A | A | 5 | 213 | A |
| Example 5* | Production Example 5 | 1.9 | 8 | 0.7 | A | A | 7 | 213 | A |
| Example 6 | Production Example 12 | 1.4 | 25 | 1.4 | A | A | 11 | 250 | A |
| Example 7* | Production Example 13 | 1.9 | 28 | 1.8 | A | A | 15 | 290 | A |
| Example 8 | Production Example 14 | 1.2 | 27 | 1.1 | A | A | 10 | 288 | A |
| Example 9 | Production Example 15 | 1.2 | 14 | 0.2 | A | A | 5 | 230 | A |
| Example 10* | Production Example 16 | 1.9 | 15 | 0.7 | A | A | 7 | 231 | A |
| Example 11 | Production Example 22 | 1.4 | 25 | 1.4 | A | A | 11 | 250 | A |
| Example 12* | Production Example 23 | 1.9 | 28 | 1.8 | A | A | 15 | 290 | A |
| Example 13 | Production Example 24 | 1.2 | 27 | 1.1 | A | A | 10 | 288 | A |
| Example 14 | Production Example 25 | 1.2 | 14 | 0.2 | A | A | 5 | 230 | A |
| Example 15* | Production Example 26 | 1.9 | 15 | 0.7 | A | A | 7 | 231 | A |
| Example 16 | Production Example 32 | 1.4 | 8 | 1.6 | A | A | 10 | 208 | A |
| Example 17* | Production Example 33 | 1.9 | 10 | 2.0 | A | A | 9 | 210 | A |
| Example 18 | Production Example 34 | 1.2 | 9 | 1.3 | A | A | 10 | 209 | A |
| Example 19 | Production Example 35 | 1.2 | 3 | 0.3 | A | A | 5 | 203 | A |
| Example 20* | Production Example 36 | 1.9 | 3 | 1.1 | A | A | 8 | 203 | A |
| Comparative Example 1 | Production Example 6 | 2.2 | 19 | 2.1 | B | B | 18 | 240 | A |
| Comparative Example 2 | Production Example 7 | 1.4 | 0 | 0 | A | B | 0 | 130 | B |
| Comparative Example 3 | Production Example 8 | 0.7 | 4 | 0.05 | A | B | 1 | 150 | B |
| Comparative Example 4 | Production Example 9 | 3.1 | 20 | 2.5 | B | A | 23 | 240 | A |
| Comparative Example 5 | Production Example 10 | 2.9 | 8 | 2.2 | B | A | 8 | 210 | A |
| Comparative Example 6 | Production Example 11 | 1.9 | unmeasurable due to non-uniform stretching of water absorbing layer | | | | | | |
| Comparative Example 7 | Production Example 17 | 2.2 | 27 | 2.3 | B | B | 20 | 240 | A |
| Comparative Example 8 | Production Example 18 | 1.4 | 0 | 0 | A | B | 0 | 130 | B |
| Comparative Example 9 | Production Example 19 | 0.7 | 10 | 0.08 | A | B | 2 | 170 | B |
| Comparative Example 10 | Production Example 20 | 3.1 | 27 | 2.8 | B | A | 27 | 240 | A |
| Comparative Example 11 | Production Example 21 | 1.9 | unmeasurable due to non-uniform stretching of water absorbing layer | | | | | | |
| Comparative Example 12 | Production Example 27 | 2.2 | 27 | 2.3 | B | B | 20 | 240 | A |
| Comparative Example 13 | Production Example 28 | 1.4 | 0 | 0 | A | B | 0 | 110 | B |
| Comparative Example 14 | Production Example 29 | 0.7 | 10 | 0.08 | A | B | 2 | 170 | B |
| Comparative Example 15 | Production Example 30 | 3.1 | 27 | 2.8 | B | B | 27 | 240 | A |
| Comparative Example 16 | Production Example 31 | 1.9 | unmeasurable due to non-uniform stretching of water absorbing layer | | | | | | |
| Comparative Example 17 | Production Example 37 | 2.2 | 8 | 2.9 | B | A | 10 | 205 | A |
| Comparative Example 18 | Production Example 38 | 1.4 | 0 | 0 | A | B | 0 | 110 | B |
| Comparative Example 19 | Production Example 39 | 0.7 | 8 | 0.09 | A | B | 3 | 165 | B |
| Comparative Example 20 | Production Example 40 | 3.1 | 10 | 3.5 | B | A | 9 | 205 | A |
| Comparative Example 21 | Production Example 41 | 1.9 | unmeasurable due to breakage | | | | | | |
| Comparative Example 22 | Production Example 42 | 2.9 | 14 | 2.5 | B | A | 8 | 208 | A |
| Comparative Example 23 | Production Example 43 | 2.9 | 12 | 2.1 | B | A | 8 | 211 | A |
| Comparative Example 24 | Production Example 44 | 2.9 | 15 | 2.6 | B | A | 8 | 211 | A |
| Comparative Example 25 | Production Example 45 | 2.9 | 15 | 2.6 | B | A | 8 | 215 | A |
| Comparative Example 26 | Production Example 46 | 2.9 | 17 | 2.7 | B | A | 8 | 210 | A |
| Comparative Example 27 | Production Example 47 | 2.9 | 14 | 2.5 | B | A | 8 | 130 | B |
| Comparative Example 28 | Production Example 48 | 1.9 | 0 | 0 | A | B | 0 | 240 | A |
| Comparative Example 29 | Production Example 49 | 3.4 | 20 | 3 | B | A | 8 | 205 | A |
| Comparative Example 30 | Production Example 50 | 2.9 | 22 | 2.7 | B | A | 26 | 240 | A |
| Comparative Example 31 | Production Example 51 | 0 | 0 | 0 | A | B | 0 | 130 | B |
| Comparative Example 32 | Production Example 52 | 0 | 0 | 0 | A | B | 0 | 130 | B |

| | | | | | | | | | |
|---|---|---|---|---|---|---|---|---|---|
| *not according to the present invention | | | | | | | | | |

It was understood from Table 4 as follows.

Examples 1, 3, 4, 6, 8, 9, 11, 13, 14, 16, 18 and 19 satisfy the requirements of the invention, in which the water absorbing layer of the stretched resin film contained from 24 to 64% by mass of a thermoplastic resin (A), from 35 to 75% by mass of inorganic fine powder (B), and from 1 to 1.5% by mass of a hydrophilizing agent (C), and had a liquid absorption capacity of 0.5 mL/m² or more and a liquid absorption coefficient of from 0.1 to 2 mL/ (m²·ms^{1/2}) calculated by the same method, caused no bubble on coating and thus were favorable as a base film for coating.

Comparative Examples 2, 8, 13 and 18 having a content of the inorganic fine powder (B) of less than 35% by mass, and Comparative Examples 28, 31 and 32 having a content of the hydrophilizing agent of less than 0.1% by mass had a liquid absorption capacity of less than 0.5 mL/m² and exhibited a small penetration depth of a coating material and a small adhesion strength, and thus were not suitable for a base film for coating.

Comparative Examples 3, 9, 14 and 19 having a content of the hydrophilizing agent of 0.1% by mass or more and less than 1% by mass exhibited slow absorption of a liquid absorption coefficient of less than 0.1 mL/ (m²·ms^{1/2}) although having a liquid absorption capacity of 0.5 mL/m² or more, i.e., a coating material was dried before permeation into the water absorption layer, and thus were not suitable for a base film for coating.

Comparative Examples 1, 4, 7, 10, 12, 15, 17, 20, 22 to 27, 29 and 30 having a content of the hydrophilizing agent exceeding 2% by mass exhibited a liquid absorption capacity of 0.5 mL/m² or more and fast absorption of a liquid absorption coefficient exceeding 2 mL/ (m²·ms^{1/2}), caused appearance failure due to formation of bubbles on coating, and thus were not suitable for a base film for coating.

Comparative Examples 6, 11, 16 and 21 having a content of the inorganic fine powder (B) contained in the water absorption layer of the stretched resin film exceeding 75% by mass failed to provide a stretched resin film due to non-uniform stretching of the water absorbing layer or breakage of the water absorbing layer in the production of the stretched resin film.

In Examples 2, 7, 12 and 17 containing 1% by mass of the dispersant (D), a slight amount of foreign matters were observed in the stretched resin film, and in Examples 3, 8, 13 and 18 containing 4% by mass of the dispersant (D), there was a tendency that on extruding the resin composition (C) continuously from the T-die exit, a solid matter was accumulated on the lip of the T-die. However, the stretched resin films obtained in these examples were favorable as a base film for coating.

While the invention has been described in detail with reference to the particular embodiments above, it is apparent to one skilled in the art that various changes and modifications may be made therein unless they deviate from the substance of the invention.

### Industrial Applicability

According to the stretched resin film of the invention, on coating a coating material, such as a heat-sensitive adhesive and an ink fixing liquid, on the surface of the film substrate, the film substrate absorbs a part of the coating material but causes no bubble in the coating material to provide a uniform coating appearance. Accordingly, the stretched resin film is useful as a base film for coating, and the base film may be favorably applied to the production of a glue label, a delayed label, an ink-jet recording medium for an aqueous ink, and the like.

## Claims

1. A stretched resin film having a water absorbing layer on at least one surface thereof, wherein:
the water absorbing layer contains from 24 to 64 % by mass of a thermoplastic resin (A), from 35 to 75 % by mass of inorganic fine powder (B), and from 1 to 1.5 % by mass of a hydrophilizing agent (C), and
the water absorbing layer has a liquid absorption capacity of 0.5 mL/m² or more measured according to the Bristow liquid absorbance test method of Japan TAPPI No. 51:2000, and a liquid absorption coefficient of from 0.1 to 2 mL/(m²·ms^{1/2}) calculated by the same method.

2. The stretched resin film according to claim 1, wherein the inorganic fine powder (B) has a surface that is hydrophilized with the hydrophilizing agent (C).

3. The stretched resin film according to claim 2, wherein the water absorbing layer contains the inorganic fine powder (B) having a surface that is hydrophilized with the hydrophilizing agent (C), and the inorganic fine powder (B) that is not hydrophilized.

4. The stretched resin film according to any one of claims 1 to 3, wherein the hydrophilizing agent (C) contains at least one of a water soluble cationic polymer and a water soluble anionic surfactant.

5. The stretched resin film according to claim 4, wherein the water soluble cationic polymer is a copolymer that contains, as constitutional units, at least one of a diallylamine salt and an alkyldiallylamine salt, and a nonionic hydrophilic vinyl monomer.

6. The stretched resin film according to any one of claims 1 to 5, wherein the thermoplastic resin (A) is a crystalline polyolefin-based resin.

7. The stretched resin film according to any one of claims 1 to 6, wherein the stretched resin film is uniaxially stretched in a stretching ratio of from 2 to 12 times.

8. The stretched resin film according to any one of claims 1 to 6, wherein the stretched resin film is biaxially stretched in an area stretching ratio of from 2 to 80 times.

9. The stretched resin film according to any one of claims 1 to 8, wherein the water absorbing layer further contains from 0.01 to 20% by mass of a dispersant (D).

10. The stretched resin film according to claim 9, wherein the dispersant (D) is at least one of an acid-modified polyolefin and a silanol-modified polyolefin.

11. The stretched resin film according to any one of claims 1 to 10, wherein the stretched resin film has a multilayer structure that has the water absorbing layer as at least one of the outermost layers thereof.

12. A laminate having the stretched resin film according to any one of claims 1 to 11 having laminated thereon another sheet material, wherein the water absorbing layer is the outermost layer thereof.

13. A method for producing a stretched resin film, including:
extruding a resin composition containing from 24 to 64 % by mass of a thermoplastic resin (A), from 35 to 75 % by mass of inorganic fine powder (B), and from 1 to 1.5 % by mass of a hydrophilizing agent (C), into a sheet form to provide a resin sheet; and
stretching the resin sheet in at least one direction.

14. The method for producing a stretched resin film according to claim 13, wherein the resin composition is laminated on at least one surface of a substrate, and then the substrate and the resin composition are stretched simultaneously.

15. The method for producing a stretched resin film according to claim 13 or 14, wherein the resin sheet is stretched at a temperature that is lower than the melting point of the thermoplastic resin (A) by 5°C or more.

## Patentansprüche

1. Gestreckter Harzfilm, der eine Wasser absorbierende Schicht auf mindestens einer seiner Oberflächen aufweist, wobei:
die Wasser absorbierende Schicht von 24 bis 64 Masseprozent eines thermoplastischen Harzes (A), von 35 bis 75 Masseprozent eines anorganischen, feinen Pulvers (B) und von 1 bis 1,5 Masseprozent eines hydrophilisierenden Mittels (C) enthält, und
die Wasser absorbierende Schicht ein Flüssigkeitsaufhahmevermögen von 0,5 ml/m² oder mehr aufweist, gemessen nach der Bristow Testmethode zur Flüssigkeitsaufnahme von Japan TAPPI Nr. 51:2000, und einen Flüssigkeitsaufnahme-Koeffizienten von 0,1 bis 2 ml/(m²·ms^{1/2}), berechnet nach derselben Methode.

2. Gestreckter Harzfilm nach Anspruch 1, wobei das anorganische, feine Pulver (B) eine Oberfläche aufweist, die mit dem hydrophilisierenden Mittel (C) hydrophilisiert ist.

3. Gestreckter Harzfilm nach Anspruch 2, wobei die Wasser absorbierende Schicht das anorganische, feine Pulver (B) enthält, welches eine Oberfläche aufweist, die mit dem hydrophilisierenden Mittel (C) hydrophilisiert ist, und das anorganische, feine Pulver (B), das nicht hydrophilisiert ist.

4. Gestreckter Harzfilm nach einem der Ansprüche 1 bis 3, wobei das hydrophilisierende Mittel (C) mindestens eines aus einem wasserlöslichen, kationischen Polymer und einem wasserlöslichen, anionischen Tensid enthält.

5. Gestreckter Harzfilm nach Anspruch 4, wobei das wasserlösliche, kationische Polymer ein Copolymer ist, welches, als Struktureinheiten, mindestens eines aus einem Diallylaminsalz und einem Alkyldiallylaminsalz, und einem nichtionischen, hydrophilen Vinylmonomer enthält.

6. Gestreckter Harzfilm nach einem der Ansprüche 1 bis 5, wobei das thermoplastische Harz (A) ein kristallines Harz auf Polyolefinbasis ist.

7. Gestreckter Harzfilm nach einem der Ansprüche 1 bis 6, wobei der gestreckte Harzfilm uniaxial in einem Streckungsverhältnis von 2 bis 12-fach gestreckt ist.

8. Gestreckter Harzfilm nach einem der Ansprüche 1 bis 6, wobei der gestreckte Harzfilm biaxial in einem Flächenstreckverhältnis von 2 bis 80-fach gestreckt ist.

9. Gestreckter Harzfilm nach einem der Ansprüche 1 bis 8, wobei die Wasser absorbierende Schicht weiterhin 0,01 bis 20 Masseprozent eines Dispersionsmittels (D) enthält.

10. Gestreckter Harzfilm nach Anspruch 9, wobei das Dispersionsmittel (D) mindestens eines aus einem säuremodifizierten Polyolefin und einem silanolmodifizierten Polyolefin ist.

11. Gestreckter Harzfilm nach einem der Ansprüche 1 bis 10, wobei der gestreckte Harzfilm eine Mehrschichtstruktur aufweist, welche die Wasser absorbierende Schicht als mindestens eine ihrer äußersten Schichten aufweist.

12. Laminat, welches den gestreckten Harzfilm nach einem der Ansprüche 1 bis 11 enthält, mit einem weiteren darauf laminierten Plattenmaterial, wobei die Wasser absorbierende Schicht die äußerste Schicht davon darstellt.

13. Verfahren zur Herstellung eines gestreckten Harzfilms, welches einschließt:
Extrudieren einer Harzzusammensetzung, die von 24 bis 64 Masseprozent eines thermoplastischen Harzes (A), von 35 bis 75 Masseprozent eines anorganischen, feinen Pulvers (B) und von 1 bis 1,5 Masseprozent eines hydrophilisierenden Mittels (C) enthält, in eine Plattenform, um eine Harzfolie zu erhalten; und
Strecken der Harzfolie in mindestens eine Richtung.

14. Verfahren zur Herstellung eines gestreckten Harzfilms nach Anspruch 13, wobei die Harzzusammensetzung auf mindestens eine Oberfläche eines Substrats laminiert wird und dann das Substrat und die Harzzusammensetzung gleichzeitig gestreckt werden.

15. Verfahren zur Herstellung eines gestreckten Harzfilms nach Anspruch 13 oder 14, wobei die Harzfolie bei einer Temperatur gestreckt wird, die um 5°C oder mehr niedriger ist als der Schmelzpunkt des thermoplastischen Harzes (A).

## Revendications

1. Film de résine étiré présentant une couche d'absorption d'eau sur au moins une surface de celui-ci, dans lequel :
la couche d'absorption d'eau contient de 24 à 64 % en masse d'une résine thermoplastique (A), de 35 à 75 % en masse de poudre fine inorganique (B), et de 1 à 1,5 % en masse d'un agent hydrophilisant (C), et
la couche d'absorption d'eau a une capacité d'absorption de liquide de 0,5 mL/m² ou plus, mesurée selon le procédé de test Bristow d'absorbance de liquide de Japan TAPPI n° 51:2000, et un coefficient d'absorption de liquide allant de 0,1 à 2 mL/(m²·ms^{1/2}) calculé par ce même procédé.

2. Le film de résine étiré selon la revendication 1, dans lequel la poudre fine inorganique (B) a une surface qui est hydrophilisée avec l'agent hydrophilisant (C).

3. Le film de résine étiré selon la revendication 2, dans lequel la couche d'absorption d'eau contient la poudre fine inorganique (B) ayant une surface qui est hydrophilisée avec l'agent hydrophilisant (C), et la poudre fine inorganique (B) qui n'est pas hydrophilisée.

4. Le film de résine étiré selon l'une quelconque des revendications 1 à 3, dans lequel l'agent hydrophilisant (C) contient au moins l'un parmi un polymère cationique hydrosoluble et un tensioactif anionique hydrosoluble.

5. Le film de résine étiré selon la revendication 4, dans lequel le polymère cationique hydrosoluble est un copolymère qui contient, comme unités constituantes, au moins l'un parmi un sel de diallylamine et un sel d'alkyldiallylamine, et un monomère de vinyle hydrophile non ionique.

6. Le film de résine étiré selon l'une quelconque des revendications 1 à 5, dans lequel la résine thermoplastique (A) est une résine à base de polyoléfine cristalline.

7. Le film de résine étiré selon l'une quelconque des revendications 1 à 6, dans lequel le film de résine étiré est étiré uniaxialement selon un rapport d'étirement allant de 2 à 12 fois.

8. Le film de résine étiré selon l'une quelconque des revendications 1 à 6, dans lequel le film de résine étiré est étiré biaxialement selon un rapport d'étirement surfacique allant de 2 à 80 fois.

9. Le film de résine étiré selon l'une quelconque des revendications 1 à 8, dans lequel la couche d'absorption d'eau contient en outre de 0,01 à 20 % en masse d'un dispersant (D).

10. Le film de résine étiré selon la revendication 9, dans lequel le dispersant (D) est au moins l'une parmi une polyoléfine modifiée par de l'acide et une polyoléfine modifiée par du silanol.

11. Le film de résine étiré selon l'une quelconque des revendications 1 à 10, dans lequel le film de résine étiré a une structure multicouche qui comporte la couche d'absorption d'eau à au moins l'une des couches les plus extérieures de celui-ci.

12. Stratifié comportant le film de résine étiré selon l'une quelconque des revendications 1 à 11, présentant un autre matériau en feuille stratifié sur celui-ci, la couche d'absorption d'eau étant la couche la plus extérieure de celui-ci.

13. Procédé de production d'un film de résine étiré, incluant :
l'extrusion d'une composition de résine contenant de 24 à 64 % en masse d'une résine thermoplastique (A), de 35 à 75 % en masse de poudre fine inorganique (B), et de 1 à 1,5 % en masse d'un agent hydrophilisant (C), dans une forme de feuille pour fournir une feuille de résine ; et
l'étirement de la feuille de résine dans au moins une direction.

14. Le procédé de production d'un film de résine étiré selon la revendication 13, dans lequel la composition de résine est stratifiée sur au moins une surface d'un substrat, et ensuite le substrat et la composition de résine sont étirés simultanément.

15. Le procédé de production d'un film de résine étiré selon la revendication 13 ou 14, dans lequel la feuille de résine est étirée à une température qui est inférieure au point de fusion de la résine thermoplastique (A), à raison de 5°C ou plus.
